# EUROPÄISCHE PATENTSCHRIFT

(11) **EP 4 279 357 B1**
(45) Veröffentlichungstag und Bekanntmachung des Hinweises auf die Patenterteilung: **25.03.2026**
(21) Anmeldenummer: 22174518.5
(22) Anmeldetag: 20.05.2022
(51) Int. Cl.: B62D 1/18

(54) **LENKSYSTEM FÜR EIN KRAFTFAHRZEUG**
STEERING SYSTEM FOR A MOTOR VEHICLE
SYSTÈME DE DIRECTION POUR UN VÉHICULE AUTOMOBILE

(43) Veröffentlichungstag der Anmeldung: 22.11.2023
(73) Patentinhaber: thyssenkrupp Presta Aktiengesellschaft, 9492 Eschen (LI); thyssenkrupp AG, 45143 Essen (DE)
(72) Erfinder: Huber, Sebastian, 6811 Göfis (AT); Bayer, Tim, 9450 Lüchingen (CH)
(74) Vertreter: thyssenkrupp Intellectual Property GmbH

(56) Entgegenhaltungen:
- EP-A1- 3 901 002
- WO-A1-2020/185030
- DE-A1- 102011 083 190
- US-A- 5 520 416
- US-A1- 2016 046 318
- US-A1- 2019 126 968
- US-A1- 2020 172 147
- US-A1- 2021 024 120
- US-A1- 2022 048 556
- US-B2- 11 186 308
- US-B2- 8 899 622

## Beschreibung

### Stand der Technik

Die Erfindung betrifft eine Lenksäule für ein Kraftfahrzeug, umfassend zumindest zwei relativ zueinander verstellbare Bauelemente, an denen ein in einer Verstellrichtung längs einer Verstellachse motorisch verstellbarer linearer Verstellantrieb angreift, wobei zwischen dem Verstellantrieb und mindestens einem der Bauelemente eine Energieabsorptionseinrichtung umfassend ein Energieabsorptionselement angeordnet ist, wobei das Energieabsorptionselement einen bezüglich der Verstellachse koaxialen Innenabschnitt aufweist, der über einen zumindest abschnittweise koaxial umlaufenden Umformabschnitt stulpenartig mit einem koaxial außen angeordneten Außenabschnitt verbunden ist.

Eine gattungsgemäße verstellbare Lenksäule, wie beispielsweise in der DE 10 2019 203 336 A1 beschrieben, weist in ihrer räumlichen Position relativ zueinander verstellbare Bauteile auf, um eine Anpassung der manuellen Bedienposition zu ermöglichen.

Eine Lenksäule weist üblicherweise eine Manteleinheit auf, die auch als Führungskasten, Außenmantelrohr oder Kastenschwinge bezeichnet wird, und in der eine Lenkspindel um eine Längsachse drehbar gelagert ist, an deren in Fahrtrichtung hinteren, der Fahrerposition zugewandten Endabschnitt ein manuelles Lenkeingabemittel angebracht ist, beispielsweise ein Lenkrad oder dergleichen. Zur Realisierung einer Längsverstellung kann in der Manteleinheit eine die Lenkspindel lagernde Stelleinheit in der durch die Längsachse gegebene Längsrichtung teleskopartig verstellbar sein, so dass die Manteleinheit und die Stelleinheit relativ zueinander verstellbare Bauteile darstellen. Alternativ oder zusätzlich kann eine Höhenverstellung dadurch realisiert sein, dass die Manteleinheit von einer an der Fahrzeugkarosserie fixierten Trageinheit in Höhenrichtung quer zur Längsachse verstellbar gehalten wird. Dann bilden die Trageinheit und die Manteleinheit relativ zueinander verstellbare Bauteile.

Zur Realisierung einer motorisierten Einstellung der Lenksäule ist es gattungsgemäß bekannt, zwischen zwei relativ zueinander verstellbaren Bauteilen einen linearen motorischen Verstellantrieb einzugliedern, beispielsweise einen elektromotorischen Spindeltrieb oder dergleichen. Ein derartiger Stellantrieb weist in der Regel eine feststehende Antriebseinheit auf, und ein relativ dazu linear in einer Verstellrichtung - bei einem Spindeltrieb in Richtung der Spindelachse - verstellbares Betätigungs- oder Stellelement. Dadurch, dass die Antriebseinheit an einem Bauteil fixiert ist, und das Stellelement an einem anderen Bauteil angreift, können diese Bauteile durch Zusammen- oder Auseinanderfahren des Verstellantriebs relativ zueinander verstellt werden. Beispielsweise kann die Stelleinheit samt Lenkrad in Längsrichtung aus der Manteleinheit ein- oder ausgefahren werden, oder die Manteleinheit kann relativ zur Fahrzeugkarosserie nach oben oder unten verschwenkt werden.

Zur Verbesserung der Insassensicherheit bei einem Fahrzeugzusammenstoß, dem sogenannten Crashfall, bei dem der Fahrer mit hoher Geschwindigkeit auf das Lenkrad aufprallt, ist es bekannt, zwischen den mittels eines Verstellantriebs relativ zueinander verstellbaren Bauteilen der Lenksäule eine Energieabsorptionsvorrichtung einzukoppeln, die auch als Crasheinrichtung bezeichnet wird. Diese absorbiert die im Crashfall eingeleitete kinetische Energie in einem Energieabsorptionselement, beispielsweise durch plastische Verformung eines Deformationselements. Dadurch kann eine kontrollierte Abbremsung des auf das Lenkrad auftreffenden Körpers erfolgen.

Aus der genannten DE 10 2019 203 336 A1 ist es bekannt, die Energieabsorptionseinrichtung zwischen dem Verstellantrieb und den relativ zueinander verstellbaren Bauteilen zu integrieren. Dadurch können im Crashfall die Bauteile in Verstellrichtung, beispielsweise in Längsrichtung, unter Energieabsorption relativ zueinander bewegt und abgebremst werden. Die im Stand der Technik bekannte Lösung sieht vor, dass durch die im Crashfall wirkende hohe Crashkraft das Getriebe der Antriebseinheit aufgetrennt und die Fragmente abgebremst werden. Diese Anordnung ist zwar kompakt, jedoch konstruktiv aufwendig und in den Energieabsorptionseigenschaften limitiert, beispielsweise hinsichtlich der Länge des Absorptionswegs. Eine alternative Lösung, die beispielsweise in der DE 10 2018 204 735 A1 ist zwar ebenfalls effektiv, ist jedoch ebenfalls aufwendig und funktional begrenzt.

Eine Lenksäule der eingangs genannten Art ist beispielsweise aus der EP 3 901 002 A1 bekannt. Nachteilig daran ist die aufwendige Ausbildung der Energieabsorptionseinrichtung.

Angesichts der vorangehend erläuterten Problematik ist es eine Aufgabe der vorliegenden Erfindung, eine einfachere Konstruktion und eine erweiterte Funktionalität zu ermöglichen.

### Darstellung der Erfindung

Diese Aufgabe wird erfindungsgemäß gelöst durch die Lenksäule mit den Merkmalen des Anspruchs 1. Vorteilhafte Weiterbildungen ergeben sich aus den Unteransprüchen.

Bei einer Lenksäule für ein Kraftfahrzeug, umfassend zumindest zwei relativ zueinander verstellbare Bauelemente, an denen ein in einer Verstellrichtung längs einer Verstellachse motorisch verstellbarer linearer Verstellantrieb angreift, wobei zwischen dem Verstellantrieb und mindestens einem der Bauelemente eine Energieabsorptionseinrichtung umfassend ein Energieabsorptionselement angeordnet ist, wobei das Energieabsorptionselement einen bezüglich der Verstellachse koaxialen Innenabschnitt aufweist, der über einen zumindest abschnittweise koaxial umlaufenden Umformabschnitt stulpenartig mit einem koaxial außen angeordneten Außenabschnitt verbunden ist, ist erfindungsgemäß vorgesehen, dass der Außenabschnitt und/oder der Innenabschnitt und/oder der Umformabschnitt rotationssymmetrisch ausgebildet sind.

Soweit nicht anders erwähnt, wird im Folgenden die Verstellrichtung gleichbedeutend auch als Axialrichtung bezeichnet. Der Umformabschnitt kann auch als Verformungsabschnitt bezeichnet werden. Der Verstellantrieb ist derart über das Energieabsorptionselement mit einem Bauteil verbunden, so dass im Crashfall bei einer relativen Bewegung dieses Bauelements in der Verstellrichtung in der Verbindung zum Verstellantrieb kinetische Energie absorbiert wird.

Erfindungsgemäß ist vorgesehen, dass der Außenabschnitt und/oder der Innenabschnitt und/oder der Umformabschnitt rotationssymmetrisch ausgebildet sind. Bevorzugt können der Außenabschnitt und/oder der Innenabschnitt rohrförmig ausgebildet sein. Bezüglich der Verstellachse können hierzu ein koaxiales Außenrohr oder eine Außenhülse bzw. ein Innenrohr oder eine Innenhülse vorgesehen sein, vorzugsweise hohlzylindrsch mit einem kreisrunden Querschnitt. Vorteile sind eine gleichmäßig hohe Biege- und Knicksteifigkeit in alle Radialrichtungen, und ein relativ geringer Fertigungs- und Montageaufwand.

Das erfindungsgemäße Energieabsorptionselement weist eine stulpenförmige, zur Verstellachse koaxiale Abordnung eines Innenabschnitts und eines Außenabschnitts auf, die stulpenartig auf einer Stirnseite über einen Umformabschnitt miteinander verbunden sind.

Durch eine relative Axialbewegung des Innenabschnitts zum Außenabschnitt ist der Innenabschnitt im Bereich des Umformabschnitts umstülpbar, Beim Umstülpen wird die umlaufende Innenwandung über den gesamten Umfang radial nach außen zum Außenabschnitt hin umgewendet, wobei der umgestülpte Abschnitt axial über den nicht umgestülpten Innenabschnitt zurückbewegt wird und diesen als Außenabschnitt umschließt. Mit anderen Worten durchläuft beim Umstülpen der Innenabschnitt unter plastischer Verformung des Umformabschnitts und wird dabei in den Außenabschnitt überführt.

Der Umformabschnitt weist einen gekrümmten Querschnitt mit einem Krümmungsradius auf, dessen Mittelpunkt, der Krümmungsmittelpunkt, auf einer konzentrisch zur Verstellachse angeordneten Biegespur liegt. Die Biegespur verläuft bevorzugt umlaufend radial zwischen Innenabschnitt und Außenabschnitt. Der Krümmungsradius ist bevorzugt kleiner als der radiale Abstand zwischen Innen- und Außenabschnitt bezüglich der Verstellachse.

Im Crashfall ist die axial zwischen Innen- und Außenabschnitt einwirkende Crashkraft größer als die axiale Steifigkeit des Umformabschnitts. Dadurch kommt es zu einer relativen Axialbewegung von Innen- und Außenabschnitt. Der Innenabschnitt taucht in der Verstellrichtung axial in den Außenabschnitt ein. Dabei bewegt sich die Biegespur, und damit der Krümmungsmittelpunkt des Umformabschnitts, ebenfalls in axialer Richtung, d.h. in Verstellrichtung, und zwar relativ zum Innen- und Außenabschnitt entgegengesetzt. Der Innenabschnitt wird beim Durchlaufen des gekrümmten Umformabschnitts unter plastischer Umformung fortlaufend in den Außenabschnitt überführt, oder umgekehrt, so dass in jedem Falls durch die plastische Verformung kontinuierlich kinetische Energie absorbiert wird.

Beim Umstülpen, welches auch als Umkrempeln bezeichnet werden kann, erfolgt eine dreidimensionale plastische Verformung, bei welcher der Innenabschnitt beim Eintritt in den Umformbereich radial aufgeweitet wird, und entlang der vorgenannten Biegespur eine fortlaufende toroidale Umformung erfolgt. Diese hat zur Folge, dass der Innenumfang des Innenabschnitts derart nach außen gewendet, gestülpt oder gekrempelt wird, dass sie nach dem Durchlaufen des Umformabschnitts den Außenumfang des Außenabschnitts bildet. Dabei ist vorteilhaft, dass ein relativ hoher Umformgrad auf kleinem Raum möglich ist, so dass bei einer kompakten Bauweise eine relativ hohe Energieabsorption realisiert werden kann.

Ein weiterer Vorteil ist, dass die koaxiale Anordnung des Innenabschnitts in dem Außenabschnitt eine Art teleskopierbare Anordnung gebildet wird, die quer zur Verstellachse eine relativ hohe Biege- oder Knicksteifigkeit hat. Dadurch ist in besonderem Maße sichergestellt, dass durch die axial eingeleitete hohe Crashkraft kein unkontrolliertes seitliches Ausbrechen oder Knicken des Energieabsorptionselements erfolgt. Die stulpenartige, koaxiale Anordnung sorgt für eine seitliche Stabilisierung während der Umformung, so dass im Crashfall eine vorteilhaft kontrollierte und gleichmäßige Energieabsorption erfolgt.

Der Umformabschnitt kann bevorzugt über den Umfang durchgehend ausgebildet sein, entsprechend einem in Umfangsrichtung geschlossenen Innenabschnitt, der beim Umstülpen en Umformabschnitt durchläuft.

Es ist vorteilhaft, dass der Umformabschnitt teiltorusförmig ausgebildet ist. Der teiltorusförmige Umformabschnitt kann beispielsweise halbtorusförmig oder vierteltorusförmig ausgebildet sein, und kann dabei jegliche Form einer in Umfangsrichtung zumindest abschnittweise konzentrisch zur Verstellachse umlaufenden, rinnenförmigen, axialen Um- oder Vorwölbung, einer Sicke oder dergleichen umfassen. Diese kann an ihrem radial inneren Rand stirnseitig mit dem Innenabschnitt verbunden sein, und mit ihrem radial äußeren Rand mit dem Außenabschnitt. Ein Vorteil ist der der stetige, oder bevorzugt stetig differenzierbare gekrümmte Verlauf des Querschnitts im Umformbereich, der eine kontinuierlich fortlaufende plastische Umformung und eine gleichmäßige Energieabsorption ermöglicht.

Es ist vorteilhaft, dass das Energieabsorptionselement einstückig ausgebildet ist. Ein einstückiges stulpenförmiges Rohrteil kann mit geringem Fertigungsaufwand als Umformteil bereitgestellt werden, beispielsweise als vorzugsweise kalt umgeformtes Pressteil, dass aus einem Rohrabschnitt geformt sein kann oder als Tiefziehbauteil.

Es kann vorgesehen sein, dass das Energieabsorptionselement aus einem metallischen Werkstoff und/oder einem Kunststoff ausgebildet ist. Beispielsweise kann eine rationelle Fertigung aus Stahlblech oder -rohr erfolgen, wodurch eine hohe Energieabsorption bei kleiner Bauweise realisiert werden kann. Der Betrag der Energieabsorption kann konstruktiv einfach durch die Materialstärke vorgegeben und angepasst werden, wobei eine größere Wandstärke eine größere Energieabsorption ermöglicht. Alternativ oder zusätzlich kann ein Kunststoff eingesetzt werden, wobei das Energieabsorptionelement als Ganzes beispielsweise als Spritzgussteil aus einem thermoplastischen Kunststoff gefertigt sein kann. Dadurch, dass ein bevorzugt einstückiger metallischer Grundkörper ganz oder teilweise mit einem Kunststoff versehen ist, beispielsweise durch eine Beschichtung, Ummantelung oder Umspritzung, kann ein optimiertes plastisches Verformungsverhalten realisiert sein. Außerdem kann die Reibung bei der Umformung reduziert werden, wodurch eine vergleichmäßigte Energieabsorption ermöglich werden kann.

Bevorzugt ist vorgesehen, dass der Außenabschnitt oder der Innenabschnitt über ein Stützelement axial mit einem Bauteil verbunden und axial dagegen abgestützt ist. Das Stützelement kann bevorzugt einen quer zur Verstellrichtung abstehenden Stützabschnitt haben, der eine koaxiale Öffnung aufweist, an deren Rand der Außenabschnitt festgelegt ist, und durch die der Innen- und Außenabschnitt im Crashfall axial hindurchtauchen können. Das Stützelement kann zugleich zur Halterung und axialen Abstützung des Verstellantriebs ausgebildet sein. Das Stützelement kann beispielsweise als Flansch ausgeführt sein, der mit dem Außenabschnitt verbunden ist.

Es ist möglich, dass die Bauteile eine Manteleinheit und eine darin in Längsrichtung entlang einer Längsachse verstellbare Stelleinheit umfassen, und/oder eine Trageinheit und eine relativ dazu in einer Längsrichtung und/oder einer Höhenrichtung verstellbaren Manteleinheit. In der Stelleinheit kann eine Lenkspindel um die Längsachse drehbar gelagert sein, an der als manuelles Lenkeingabemittel ein Lenkrad oder dergleichen anbringbar sein kann. Dadurch, dass der Verstellantrieb einschließlich der erfindungsgemäßen Energieabsorptionseinrichtung zwischen Manteleinheit und Stelleinheit eingegliedert ist, wird eine Energieabsorption in Längsrichtung ermöglicht, um einen beim Crash auf das Lenkrad aufprallenden Körper effektiv abzubremsen. Durch die Erfindung kann eine kompakte Bauform realisiert werden, und durch die oben erwähnte hohe Knick- und Biegesteifigkeit des Energieabsorptionselements wird eine hohe Funktionssicherheit auch unter extremen Belastungen sichergestellt. Diese Vorteile können zusätzlich oder alternativ kann durch eine Anordnung zwischen einer höhenverstellbaren Manteleinheit und einer karosseriefesten Trageinheit realisiert werden.

Der Verstellantrieb kann an dem Innenabschnitt oder dem Außenabschnitt axial abgestützt sein. Dadurch, dass der Verstellantrieb an dem Innenabschnitt in der Verstellrichtung axial fixiert ist, und der Außenabschnitt, bevorzugt über ein Stützelement, an einem Bauteil, kann die erfindungsgemäße Energieabsorptionseinrichtung konstruktiv einfach und funktionssicher baulich integriert werden.

Es kann vorgesehen sein, dass der Verstellantrieb eine motorische Antriebseinheit und ein relativ dazu verstellbares Stellelement aufweist. Die Antriebseinheit weist bevorzugt einen elektrischen Motor auf, dessen Antriebsmoment in eine relative lineare Verlagerung des Stellelements in der Verstellrichtung umgesetzt werden kann, bevorzugt über ein entsprechend ausgebildetes Getriebe. Die Antriebseinheit kann mit dem Energieabsorptionselement verbunden und axial abgestützt sein, welches mit dem einen, feststehenden Bauteil verbunden ist, wobei das Stellelement mit dem anderen, relativ zu dem feststehenden verstellbaren Bauteil verbunden ist, oder umgekehrt.

Bevorzugt ist es möglich, dass der Verstellantrieb einen Spindeltrieb aufweist. Bei einem Spindeltrieb sind in an sich bekannter Weise eine Spindelmutter und eine darin eingreifende Gewindespindel um die Spindelachse relativ zueinander drehend antreibbar, wodurch diese in Richtung der Spindelachse linear relativ zueinander verstellt werden. Der Spindeltrieb kann als Rotationsspindeltrieb oder Tauchspindeltrieb ausgebildet sein. Beim Rotationsspindeltrieb wird die Gewindespindel in der Antriebseinheit drehend angetrieben und dabei axial an einem Bauteil abgestützt, und die Spindelmutter ist bezüglich der Drehung feststehend an dem anderen, verstellbaren Bauteil axial abgestützt. Beim Tauchspindeltrieb ist die Spindelmutter in der Antriebseinheit drehend angetrieben und dabei axial an einem Bauteil abgestützt, und die Gewindespindel ist bezüglich der Drehung feststehend an dem anderen, verstellbaren Bauteil axial abgestützt. Es ist bevorzugt, dass die Verstellachse identisch mit der Spindelachse ist, so dass das erfindungsgemäße Energieabsorptionselement koaxial zur Spindelachse ausgebildet ist. Dadurch kann eine symmetrische koaxiale Krafteinleitung weitgehend ohne potentiell störende Querkräfte erfolgen, wodurch die Funktions- und Betriebssicherheit erhöht wird, insbesondere auch im Vergleich zu asymmetrischen Anordnungen, bei denen der Verstellantrieb einseitig an einem Energieabsorptionselement abgestützt ist, und Querkräfte unvermeidlich sind. Die Konstruktion kann erfindungsgemäß dadurch vereinfacht werden, dass durch die hohe Biege- und Knicksteifigkeit des erfindungsgemäßen Energieabsorptionselements keine zusätzlichen Führungsmittel zur Querstabilisierung vorgesehen werden müssen.

Es kann mit Vorteil vorgesehen sein, dass der Spindeltrieb eine Antriebseinheit aufweist, die mit der Energieabsorptionseinrichtung verbunden ist. Der Innenabschnitt kann beispielsweise direkt mit einem Antriebsgehäuse der Antriebseinheit verbunden oder baulich integriert sein. Das Antriebsgehäuse, in dem die Spindelmutter oder die Gewindespindel koaxial drehend antreibbar gelagert ist, kann bevorzugt rohrförmig sein und in seinen Abmessungen im Wesentlichen mit dem bevorzugt ebenfalls rohrförmigen Innenabschnitt korrespondieren. Dadurch kann eine konstruktiv einfache bauliche Integration erfolgen, und es wird eine kompakte Bauweise ermöglicht.

### Beschreibung der Zeichnungen

Vorteilhafte Ausführungsformen der Erfindung werden im Folgenden anhand der Zeichnungen näher erläutert. Im Einzelnen zeigen:
- Figur 1: eine erfindungsgemäße Lenksäule in einer schematischen perspektivischen Ansicht in einem normalen Betriebszustand,
- Figur 2: die Lenksäule gemäß Figur 1 nach einem Crashfall,
- Figur 3: ein Schnitt durch die Lenksäule gemäß Figur 1 entlang der Verstellachse,
- Figur 4: ein Schnitt wie in Figur 3 durch die Lenksäule gemäß Figur 2,
- Figur 5: eine vergrößerte Detailansicht der Energieabsorptionsvorrichtung von Figur 4,
- Figur 6: einen vergrößerten Schnitt durch die Energieabsorptionsvorrichtung in einer zweiten Ausführungsform in einem normalen Betriebszustand, analog zu Figur 3.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

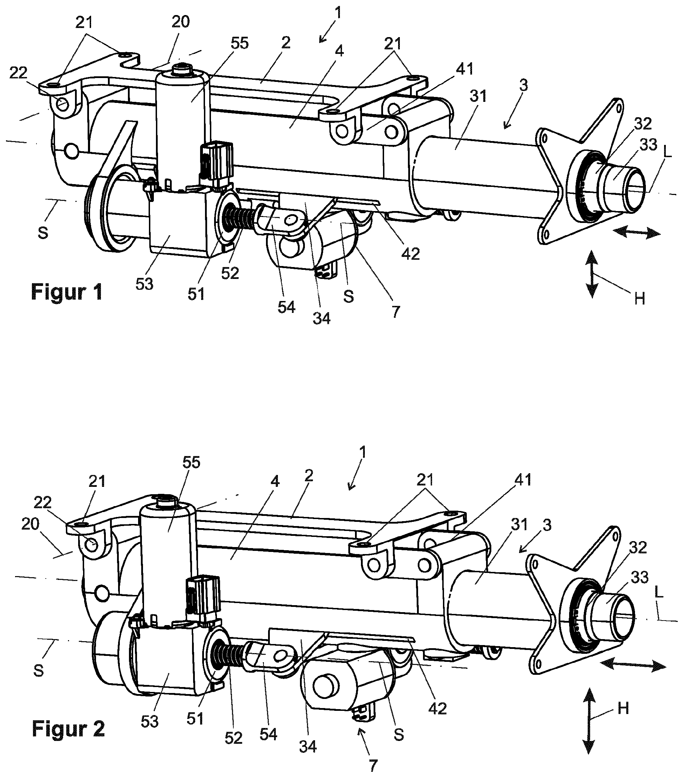

Figuren 1 und 2 zeigen eine erfindungsgemäße Lenksäule 1 in einer schematischen perspektivischen Ansicht von rechts schräg auf das hintere Ende, bezogen auf die Fahrtrichtung eines nicht dargestellten Fahrzeugs, wo ein hier nicht dargestelltes Lenkrad im Bedienungsbereich gehalten wird. Dabei zeigt Figur 1 einen normalen Betriebszustand, und Figur 2 den Zustand nach einem Crash (Crashzustand).

Die Lenksäule 1 umfasst eine Trageinheit 2, die Befestigungsmittel 21 in Form von Befestigungsbohrungen aufweist, die zur Anbringung an einer nicht dargestellten Fahrzeug-Karosserie dienen. Von der Trageinheit 2 wird eine Stelleinheit 3 gehalten, die in einer Manteleinheit 4 in einem Außenmantel aufgenommen ist, der auch Führungskasten oder Kastenschwinge bezeichnet wird.

Die Stelleinheit 3 weist einen Innenmantel 31 (Mantelrohr) auf, in dem eine Lenkspindel 32 um eine Längsachse L drehbar gelagert ist, die sich axial in Längsrichtung, d.h. in Richtung der Längsachse L, erstreckt. Am hinteren Ende ist an der Lenkspindel 32 ein Befestigungsabschnitt 33 ausgebildet, an dem ein hier nicht dargestelltes Lenkrad anbringbar ist.

Die Stelleinheit 3 ist zur Realisierung einer Längsverstellung in der Manteleinheit 4 in Richtung der Längsachse L teleskopartig verschiebbar aufgenommen, um das mit der Lenkspindel 32 verbundene Lenkrad relativ zur Trageinheit 2 in Längsrichtung vor und zurück positionieren zu können, wie mit dem Doppelpfeil parallel zur Längsachse L angedeutet ist.

Die Manteleinheit 4 ist um eine quer zur Längsachse L liegende, horizontale Schwenkachse 20 verschwenkbar in einem Schwenklager 22 an der Trageinheit 2 gelagert. Im hinteren Bereich ist die Manteleinheit 4 über einen Stellhebel 41 mit der Trageinheit 2 verbunden. Durch eine Drehbewegung des Stellhebels 41 mittels eines dargestellten Stellantriebs 6 (siehe Figur 2) kann die Manteleinheit 4 relativ zur Trageinheit 2 um die im Einbauzustand waagerecht liegende Schwenkachse 20 verschwenkt werden, wodurch eine Verstellung eines an dem Befestigungsabschnitt 33 angebrachten Lenkrads in Höhenrichtung H vorgenommen werden kann, wie mit einem Doppelpfeil angedeutet ist.

Ein Verstellantrieb 5 ist in dieser ersten Ausführungsform als Tauchspindeltrieb ausgebildet und weist eine Spindelmutter 51 auf, in die eine längs ihrer Spindelachse S erstreckte Gewindespindel 52 eingreift. Die Spindelachse S ist identisch mit der Verstellachse im Sinne der Erfindung, welche die lineare Verstellrichtung angibt. In dem gezeigten Beispiel des Verstellantriebs 5 zur Längsverstellung liegt die Spindel- oder Verstellachse S parallel zur Längsachse L.

Die Gewindespindel 52 ist mit einem an ihrem hinteren Ende ausgebildeten Befestigungselement 54 über ein Übertragungselement 34 mit der Stelleinheit 3 verbunden, und zwar fest in Richtung der Spindelachse S bzw. der Längsachse L, und dabei feststehend bezüglich Drehung um die Spindelachse S.

Das Übertragungselement 34 erstreckt sich von der Stelleinheit 3 durch eine schlitzförmige Durchgangsöffnung 42 in der Manteleinheit 4. Zur Verstellung der Lenksäule 1 in Längsrichtung kann das Übertragungselement 34 frei in der Durchgangsöffnung 42 in Längsrichtung entlangbewegt werden.

Die Spindelmutter 51 ist in einer Antriebseinheit 53 axial, in Richtung der Spindelachse S, abgestützt und von einem elektrischen Motor 55 um die Spindelachse S relativ zur Gewindespindel 52 drehend antreibbar.

Durch die drehend antreibbare Spindelmutter 51 und die bezüglich Drehung relativ dazu feststehende Gewindespindel 52 wird ein sogenannter Tauchspindelantrieb realisiert. Dabei kann - je nach Drehrichtung des Motors 55 - die Gewindespindel 52 in Richtung der Spindelachse S translatorisch relativ zur Spindelmutter 51 verlagert werden, so dass entsprechend die mit der Gewindespindel 52 verbundene Stelleinheit 3 relativ zu der mit der Spindelmutter 51 verbundenen Manteleinheit 4 in Richtung der Längsachse L verstellt werden kann.

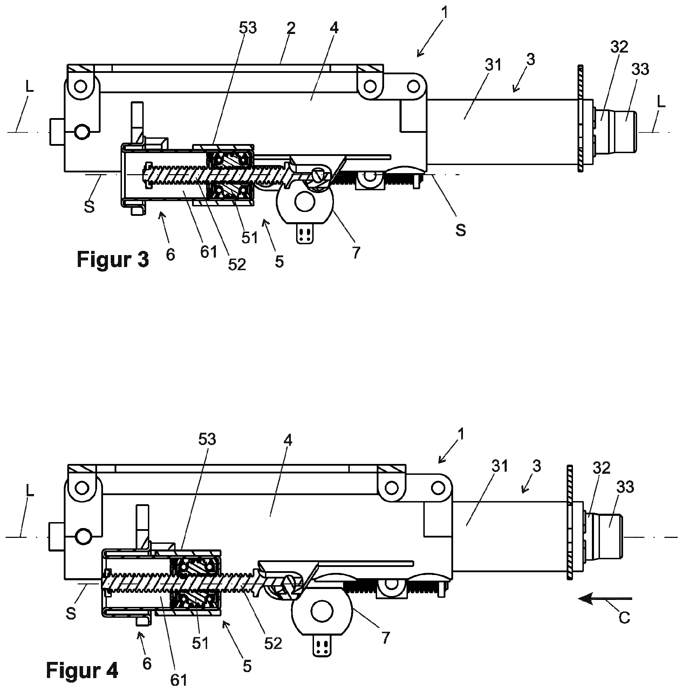

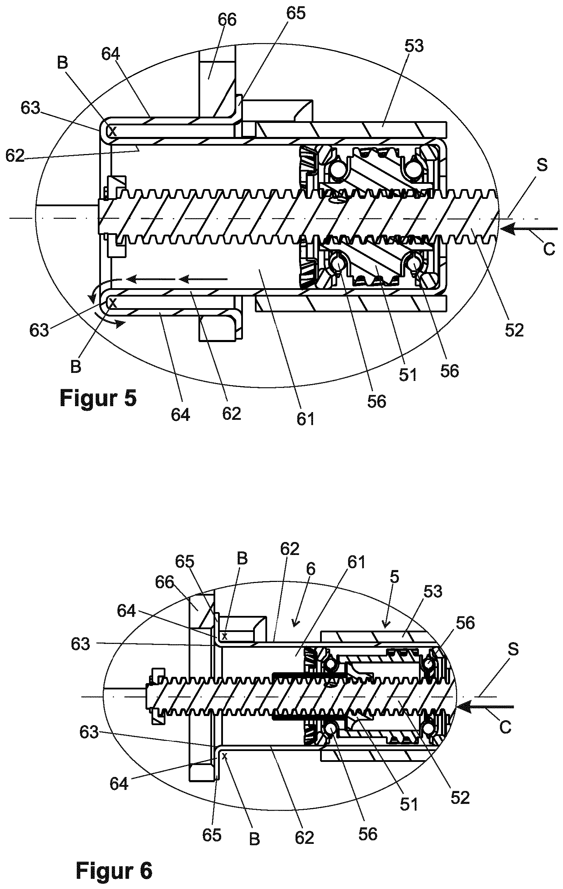

Der Verstellantrieb 5 ist über eine erfindungsgemäße Energieabsorptionseinrichtung 6 an der Manteleinheit 4 abgestützt. Zur Verdeutlichung ist in Figur 3 und Figur 4 ein Längsschnitt enntlang der Spindelachse S gezeigt, und zwar in Figur 3 im normalen Betriebszustand wie in Figur 1, und in Figur 4 im Zustand wie in Figur 2 nach einem Crash. Figur 5 zeigt die Energieabsorptionseinrichtung 6 aus Figur 4 in einer vergrößerten Detaildarstellung.

Die erfindungsgemäße Energieabsorptionseinrichtung 6 weist ein zur Spindelachse S koaxiales, rotationssymmetrisches Energieabsorptionselement 61 auf, welches erfindungsgemäß stulpenförmig ausgebildet ist, wie im Folgenden erläutert wird.

In der vergrößerten Darstellung von Figur 5 ist erkennbar, dass das Energieabsorptionselement 61 einen zylindrisch-rohrförmigen Innenabschnitt 62 aufweist, der koaxial zur Spindelachse S angeordnet ist, und der über einen stirnseitigen, sickenförmigen Umformabschnitt 63 in einen Außenabschnitt 64 übergeht, der den Innenabschnitt 63 koaxial umgibt.

Der Außenabschnitt 64 weist einem umlaufenden Flansch 65 auf, der axial an einem Stützelement 66 abgestützt ist, welches mit der Manteleinheit 4 fest verbunden ist.

Der hohlzylindrische Innenabschnitt 62 ist koaxial in dem Antriebsgehäuse 53 aufgenommen und festgelegt. Dabei kann die Spindelmutter 51, die außen beispielsweise eine Schneckenverzahnung aufweist, die mit einer von dem Motor 55 angetriebenen Schnecke in Getriebeeingriff steht, bevorzugt koaxial innerhalb des rohrförmigen Innenabschnitts 62 in einer Lageranordnung 56 um die Spindelachse S drehbar gelagert und dabei axial abgestützt sein.

Im Crashfall wird über die Lenkspindel 32 eine hohe axiale Crashkraft C in die Stelleinheit 3 eingeleitet, wie in Figur 4 eingezeichnet ist. Diese Crashkraft C wirkt über die Gewindespindel 52, die Spindelmutter 51 und das Antriebsgehäuse 53 axial bezüglich der Spindelachse S auf den Innenabschnitt 62 des Energieabsorptionselements 61. Dabei wird es unter plastischer, toroidaler Umbiegung entlang einer koaxial um die Spindelachse S umlaufenden Biegespur B fortlaufend radial nach außen auf- oder umgebogen, wobei es in den Außenabschnitt 64 übergeht, oder mit anderen Worten in einen Bestandteil des Außenabschnitts 64 umgeformt wird. Dieser plastische, kinetische Energie aufzehrende Umformvorgang ist in Figur 5 mit den gestrichelten Pfeilen angedeutet.

Über den Flansch 65 ist das freie Ende des Außenabschnitts 64 über das Stützelement 66 an der Manteleinheit 4 fixiert. Während der Umformung im Crashfall wird das Energieabsorptionselement 61 fortlaufend wie vorangehend beschrieben umgestülpt oder umgekrempelt, wobei während des Umstülpens der dann im Wesentlichen halbtorusförmige Umformabschnitt 63 mit seiner Biegespur B in Richtung der Crashkraft C relativ zur Manteleinheit 4 nach vorn wandert. Dadurch wird die über die Stelleinheit 3 eingeleitete kinetische Energie absorbiert, und die Stelleinheit 3 relativ zur Manteleinheit 4 kontrolliert abgebremst.

Figur 6 zeigt eine vergrößerte Schnittansicht entlang der Spindelachse S durch die Energieabsorptionseinrichtung 6 in einer gegenüber Figur 3 abgewandelten Ausführungsform in einem normalen Betriebszustand vor einem Crashfall. Dabei ist der Umformabschnitt 53 zunächst nicht wie in Figur 3 halbtorusförmig gerundet wie in Figur 3, sondern in etwa vierteltorusförmig. Der sich an den Umformabschnitt 63 anschließende Außenabschnitt 64 verläuft in diesem nicht umgeformten Zustand zunächst noch radial zwischen dem äußeren Rand des Umformabschnitts 63 und dem inneren Rand des Flansches 65. Bei einem Crash taucht der Innenabschnitt 62 wie in der ersten Ausführungsform in Richtung der Crashkraft C axial durch den Flansch 65 hindurch, wobei der Außenabschnitt 64 in entgegengesetzter axialer Richtung außen über den Innenabschnitt 62, bewegt wird, so dass beim Crash im Prinzip der in Figur 5 gezeigte Zustand erzeugt wird. Dabei wird der im normalen Betriebszustand die im Querschnitt etwa viertelkreisförmige Sicke des Umformabschnitts 63 zunächst im Querschnitt halbkreisförmig umgeformt, und anschließend dann ebenfalls im wesentlichen halbtorusförmig. Der beschriebene Energieabsorptionsmechanismus ist gleich.

Zur Höhenverstellung kann ein zweiter motorischer Verstellantrieb 7 vorgesehen sein, der zwischen der Manteleinheit 4 und der Trageinheit 2 angreift. Dieser kann ebenfalls als Spindeltrieb ausgebildet sein, und kann ebenfalls eine Energieabsorptionseinrichtung 6 aufweisen, die gemäß der Erfindung oder auch anders aufgebaut sein kann.

### Bezugszeichenliste

- 1: Lenksäule
- 2: Trageinheit
- 20: Schwenkachse
- 21: Befestigungsmittel
- 22: Schwenklager
- 3: Stelleinheit
- 31: Innenmantel (Mantelrohr)
- 32: Lenkspindel
- 33: Befestigungsabschnitt
- 34: Übertragungselement
- 4: Manteleinheit
- 41: Stellhebel
- 42: Durchgangsöffnung
- 5: Verstellantrieb
- 51: Spindelmutter
- 52: Gewindespindel
- 53: Antriebseinheit
- 54: Befestigungselement
- 55: Motor (Antriebsmotor)
- 56: Lageranordnung
- 6: Energieabsorptionseinrichtung
- 61: Energieabsorptionselement
- 62: Innenabschnitt
- 63: Umformabschnitt
- 64: Außenabschnitt
- 65: Flansch
- 66: Stützelement
- 7: Verstellantrieb

- L: Längsachse
- H: Höhenrichtung
- S: Spindelachse (Gewindespindelachse)
- B: Biegespur
- C: Crashkraft

## Patentansprüche

1. Lenksäule (1) für ein Kraftfahrzeug, umfassend zumindest zwei relativ zueinander verstellbare Bauelemente (3, 4), an denen ein in einer Verstellrichtung längs einer Verstellachse (S) motorisch verstellbarer linearer Verstellantrieb (6) angreift, wobei zwischen dem Verstellantrieb (5) und mindestens einem der Bauelemente (4) eine Energieabsorptionseinrichtung (6) umfassend ein Energieabsorptionselement (61) angeordnet ist, wobei das Energieabsorptionselement (61) einen bezüglich der Verstellachse (S) koaxialen Innenabschnitt (62) aufweist, der über einen zumindest abschnittweise koaxial umlaufenden Umformabschnitt (63) stulpenartig mit einem koaxial außen angeordneten Außenabschnitt (64) verbunden ist,
**dadurch gekennzeichnet,**
**dass** der Außenabschnitt (64) und/oder der Innenabschnitt (62) und/oder der Umformabschnitt (63) rotationssymmetrisch ausgebildet sind.

2. Lenksäule nach Anspruch 1, **dadurch gekennzeichnet, dass** der Umformabschnitt (63) teiltorusförmig ausgebildet ist.

3. Lenksäule nach einem der vorangehenden Ansprüche, **dadurch gekennzeichnet, dass** der Außenabschnitt (64) und/oder der Innenabschnitt (62) rohrförmig ausgebildet sind.

4. Lenksäule nach einem der vorangehenden Ansprüche, **dadurch gekennzeichnet, dass** das Energieabsorptionselement (61) einstückig ausgebildet ist.

5. Lenksäule nach einem der vorangehenden Ansprüche, **dadurch gekennzeichnet, dass** das Energieabsorptionselement (61) aus einem metallischen Werkstoff und/oder einem Kunststoff ausgebildet ist.

6. Lenksäule nach einem der vorangehenden Ansprüche, **dadurch gekennzeichnet, dass** der Außenabschnitt (64) oder der Innenabschnitt (62) über ein Stützelement (66) axial mit einem Bauteil (4) verbunden und axial dagegen abgestützt ist.

7. Lenksäule nach einem der vorangehenden Ansprüche, **dadurch gekennzeichnet, dass** die Bauteile eine Manteleinheit (4) und eine darin in Längsrichtung entlang einer Längsachse (L) verstellbare Stelleinheit (3) umfassen, und/oder eine Trageinheit (2) und eine relativ dazu in einer Längsrichtung und/oder einer Höhenrichtung verstellbaren Manteleinheit (4).

8. Lenksäule nach einem der vorangehenden Ansprüche, **dadurch gekennzeichnet, dass** der Verstellantrieb (5) an dem Innenabschnitt (62) oder dem Außenabschnitt (64) axial abgestützt ist.

9. Lenksäule nach einem der vorangehenden Ansprüche, **dadurch gekennzeichnet, dass** der Verstellantrieb (5) eine motorische Antriebseinheit (55, 53) und ein relativ dazu verstellbares Stellelement (52) aufweist.

10. Lenksäule nach einem der vorangehenden Ansprüche, **dadurch gekennzeichnet, dass** der Verstellantrieb (5) einen Spindeltrieb aufweist.

11. Lenksäule nach Anspruch 10, **dadurch gekennzeichnet, dass** der Spindeltrieb eine Antriebseinheit (53) aufweist, die mit der Energieabsorptionseinrichtung (6) verbunden ist.

## Claims

1. Steering column (1) for a motor vehicle, comprising at least two structural elements (3, 4) which can be adjusted relative to each other and with which a linear adjustment drive (6) which can be adjusted in an adjustment direction in a motorised manner along an adjustment axis (S) engages, wherein between the adjustment drive (5) and at least one of the structural elements (4) an energy absorption device (6) comprising an energy absorption element (61) is arranged,
wherein the energy absorption element (61) has an inner portion (62) which is coaxial relative to the adjustment axis (S) and which is connected by means of an at least partially coaxially extending shaping portion (63) in a sleeve-like manner to an outer portion (64) which is arranged coaxially at the outer side,
**characterized in that**
the outer portion (64) and/or the inner portion (62) and/or the shaping portion (63) are constructed in a rotationally symmetrical manner.

2. Steering column according to claim 1, **characterized in that** the shaping portion (63) is in the form of a part-torus.

3. Steering column according to any one of the preceding claims, **characterized in that** the outer portion (64) and/or the inner portion (62) are constructed in a tubular manner.

4. Steering column according to any one of the preceding claims, **characterized in that** the energy absorption element (61) is constructed in one piece.

5. Steering column according to any one of the preceding claims, **characterized in that** the energy absorption element (61) is constructed from a metal material and/or a plastics material.

6. Steering column according to any one of the preceding claims, **characterized in that** the outer portion (64) or the inner portion (62) is axially connected to a component (4) by means of a support element (66) and is axially supported against it.

7. Steering column according to any one of the preceding claims, **characterized in that** the components comprise a covering unit (4) and an actuation unit (3) which can be adjusted therein in the longitudinal direction along a longitudinal axis (L), and/or a carrier unit (2) and a covering unit (4) which can be adjusted relative thereto in a longitudinal direction and/or a vertical direction.

8. Steering column according to any one of the preceding claims, **characterized in that** the adjustment drive (5) is axially supported on the inner portion (62) or the outer portion (64).

9. Steering column according to any one of the preceding claims, **characterized in that** the adjustment drive (5) has a motorised drive unit (55, 53) and an adjustment element (52) which can be adjusted relative thereto.

10. Steering column according to any one of the preceding claims, **characterized in that** the adjustment drive (5) has a spindle drive.

11. Steering column according to claim 10, **characterized in that** the spindle drive has a drive unit (53) which is connected to the energy absorption device (6).

## Revendications

1. Colonne de direction (1) pour un véhicule automobile, comprenant au moins deux éléments de construction (3, 4) réglables l'un par rapport à l'autre, sur lesquels agit un entraînement de réglage (6) linéaire, réglable par moteur dans une direction de réglage le long d'un axe de réglage (S), un dispositif d'absorption d'énergie (6) comprenant un élément d'absorption d'énergie (61) étant disposé entre l'entraînement de réglage (5) et au moins l'un des éléments de construction (4), l'élément d'absorption d'énergie (61) présentant une section intérieure (62) coaxiale par rapport à l'axe de réglage (S), qui est reliée à la manière d'une manchette à une section extérieure (64) disposée coaxialement à l'extérieur par l'intermédiaire d'une section de déformation (63) s'étendant coaxialement au moins par sections,
**caractérisé en ce que**
**en ce que** la section extérieure (64) et/ou la section intérieure (62) et/ou la section de déformation (63) sont réalisées avec une symétrie de rotation.

2. Colonne de direction selon la revendication 1, **caractérisée en ce que** la section de formage (63) est réalisée en forme de tore divisé.

3. Colonne de direction selon l'une des revendications précédentes, **caractérisée en ce que** la portion extérieure (64) et/ou la portion intérieure (62) sont de forme tubulaire.

4. Colonne de direction selon l'une des revendications précédentes, **caractérisée en ce que** l'élément d'absorption d'énergie (61) est réalisé d'une seule pièce.

5. Colonne de direction selon l'une des revendications précédentes, **caractérisée en ce que** l'élément d'absorption d'énergie (61) est réalisé en un matériau métallique et/ou en une matière plastique.

6. Colonne de direction selon l'une des revendications précédentes, **caractérisée en ce que** la section extérieure (64) ou la section intérieure (62) est reliée axialement à un composant (4) par l'intermédiaire d'un élément de support (66) et est supportée axialement contre celui-ci.

7. Colonne de direction selon l'une des revendications précédentes, **caractérisée en ce que** les composants comprennent une unité d'enveloppe (4) et une unité de réglage (3) réglable dans celle-ci dans la direction longitudinale le long d'un axe longitudinal (L), et/ou une unité de support (2) et une unité d'enveloppe (4) réglable par rapport à celle-ci dans une direction longitudinale et/ou une direction de hauteur.

8. Colonne de direction selon l'une des revendications précédentes, **caractérisée en ce que** l'entraînement de réglage (5) est en appui axial sur la portion intérieure (62) ou la portion extérieure (64).

9. Colonne de direction selon l'une des revendications précédentes, **caractérisée en ce que** l'entraînement de réglage (5) présente une unité d'entraînement motorisée (55, 53) et un élément de réglage (52) réglable par rapport à celle-ci.

10. Colonne de direction selon l'une des revendications précédentes, **caractérisée en ce que** l'entraînement de réglage (5) présente un entraînement à broche.

11. Colonne de direction selon la revendication 10, **caractérisée en ce que** l'entraînement à broche présente une unité d'entraînement (53) qui est reliée au dispositif d'absorption d'énergie (6).
